(19) Europäisches Patentamt / European Patent Office / Office européen des brevets

(11) **EP 3 285 944 B1**

(12) **EUROPÄISCHE PATENTSCHRIFT**

(45) Veröffentlichungstag und Bekanntmachung des Hinweises auf die Patenterteilung:
**04.08.2021 Patentblatt 2021/31**

(21) Anmeldenummer: **16715513.4**

(22) Anmeldetag: **08.04.2016**

(51) Int Cl.:
*B22F 10/322* (2021.01)    *B22F 10/366* (2021.01)
*B22F 10/85* (2021.01)     *B22F 12/70* (2021.01)
*B22F 12/90* (2021.01)     *B33Y 30/00* (2015.01)
*B22F 10/28* (2021.01)     *B33Y 50/02* (2015.01)
*B29C 64/153* (2017.01)    *B22F 10/38* (2021.01)
*B22F 10/20* (2021.01)     *B22F 10/30* (2021.01)
*B22F 10/77* (2021.01)     *B22F 12/41* (2021.01)

(86) Internationale Anmeldenummer:
**PCT/EP2016/057694**

(87) Internationale Veröffentlichungsnummer:
**WO 2016/169784 (27.10.2016 Gazette 2016/43)**

(54) **VORRICHTUNG, VERFAHREN UND STEUEREINHEIT ZUR GENERATIVEN HERSTELLUNG EINES DREIDIMENSIONALEN OBJEKTES**

DEVICE, METHOD AND CONTROL UNIT FOR THE GENERATIVE PRODUCTION OF A THREE-DIMENSIONAL OBJECT

DISPOSITIF, PROCÉDÉ ET UNITÉ DE COMMANDE POUR LA FABRICATION GÉNÉRATIVE D'UN OBJET TRIDIMENSIONNEL

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **21.04.2015 DE 102015207254**

(43) Veröffentlichungstag der Anmeldung:
**28.02.2018 Patentblatt 2018/09**

(73) Patentinhaber: **EOS GmbH Electro Optical Systems**
**82152 Krailling (DE)**

(72) Erfinder: **DOMRÖSE, Robert Achim**
**82110 Germering (DE)**

(74) Vertreter: **Prüfer & Partner mbB**
**Patentanwälte · Rechtsanwälte**
**Sohnckestraße 12**
**81479 München (DE)**

(56) Entgegenhaltungen:
WO-A2-2015/040433    DE-A1-102013 205 724
US-A1- 2010 270 708    US-A1- 2012 126 457

• NING Y ET AL: "An Approach to Minimize Build Errorsin Direct Metal Laser Sintering", IEEE TRANSACTIONS ON AUTOMATION SCIENCE AND ENGINEERING, IEEE SERVICE CENTER, NEW YORK, NY, US , Bd. 3, Nr. 1 1. Januar 2006 (2006-01-01), Seiten 73-80, XP002732965, ISSN: 1545-5955 Gefunden im Internet: URL:http://ieeexplore.ieee.org/stamp/stamp .jsp ?tp=&arnumber=1566659 [gefunden am 2014-11-25]

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 3 285 944 B1

## Beschreibung

Die vorliegende Erfindung bezieht sich auf eine Vorrichtung und ein Verfahren zum schichtweisen Aufbau von dreidimensionalen Objekten mittels generativer Fertigung, auch "Additive Manufacturing" genannt. Insbesondere bezieht sich die Erfindung auf generative Fertigungsprozesse, bei denen ein dreidimensionales Objekt schichtweise aus einem pulverförmigen metallischen Werkstoff generiert wird.

Die erwähnten Verfahren werden je nach spezieller Ausgestaltung auch als "selektives Lasersintern", "selektives Laserschmelzen", "direktes Metall-Lasersintern" (direct metal laser sintering - DMLS), "Rapid Prototyping", "Rapid Tooling" oder "Rapid Manufacturing" bezeichnet. Eine Vorrichtung zur Durchführung solch eines Verfahrens ist beispielsweise in der Druckschrift DE 195 14 740 C1 beschrieben. Gemäß dieser Druckschrift wird zunächst mittels eines Beschichters eine dünne Schicht des pulverförmigen Aufbaumaterials aufgetragen und dieses anschließend an den dem jeweiligen Querschnitt des Objekts entsprechenden Stellen durch Einwirken eines Laserstrahls verfestigt. Die beiden letztgenannten Schritte werden abwechselnd so lange wiederholt, bis das herzustellende dreidimensionale Objekt fertiggestellt ist.

Für die mechanischen Eigenschaften der herzustellenden Objekte kann es von Vorteil sein, wenn der Laserstrahl die in einer aufgetragenen Pulverschicht zu verfestigenden Stellen bereichsweise abtastet. DE 10 2007 014 683 A1 beschreibt beispielsweise ein Verfahren, bei dem der mit dem Laserstrahl abzutastende Bereich der Schicht in längliche Streifenbereiche unterteilt wird und die einzelnen Streifenbereiche durch linienweises Abtasten in einer Richtung quer zur Längsrichtung der Streifenbereiche mit dem Laserstrahl belichtet werden. Diese Vorgehensweise wird auch in DE 10 2013 205 724 A1 beschrieben, wo beispielsweise innerhalb eines Streifenbereichs die Abtastrichtungen zweier benachbarter Bewegungsvektoren des Laserstrahls einander entgegengesetzt sind. Die Bereiche der Richtungsumkehr der Bewegung des Laserstrahls, in denen der Laserstrahl ausgeschaltet oder ausgeblendet ist, liegen dabei außerhalb des Streifenbereichs.

Bei der Einwirkung des Laserstrahls auf das jeweils verwendete Material, insbesondere wenn es sich um bindemittel- und flussmittelfreies metallisches Werkstoffpulver handelt, können oftmals Spratzer, Rauch und Dämpfe entstehen, die sich in den Bauraum hinein ausbreiten. Die Ursache hierfür sind beispielsweise Gasbildungen in der durch den Laser erzeugten Materialschmelze, die beim Abkühlen aus dem Material entweichen. Um zu verhindern, dass sich Verschmutzungen durch Spratzer, Rauch und Dämpfe auf einem Einkoppelfenster für den Laserstrahl niederschlagen, schlägt DE 198 53 947 A1 einen Prozessraum vor, bei dem an zwei gegenüberliegenden Enden ein Schutzgaseinlass und ein Schutzgasauslass angeordnet sind, so dass ein gerichteter Schutzgasstrom durch die Prozesskammer geleitet werden kann. Durch diesen Schutzgasstrom werden die Verschmutzungen aus der Prozesskammer entfernt.

Auch in DE 10 2013 205 724 A1 wird vorgeschlagen, während des Abtastens mit dem Laserstrahl einen Gasstrom über die aufgetragene Schicht zu leiten. Dabei werden eine Hauptströmungsrichtung des Gasstroms und die Abtastrichtung, also die Bewegungsrichtung des Laserstrahls zumindest in einem Bereich des zu verfestigenden Querschnitts des herzustellenden aufeinander abgestimmt. Die US 2012/126457 A1 offenbart ein Verfahren bei dem das Abtasten unterbrochen wird um das Gas auszutauschen.

Die Verwendung eines Schutzgasstroms ist darüber hinaus im Stand der Technik bekannt zur Herstellung einer gleichmäßigen Oberflächentemperatur der Pulverschicht für homogenere Prozessbedingungen, siehe diesbezüglich WO 92/08592 A.

Im Stand der Technik werden Spratzer, Rauch und Dämpfe insbesondere deshalb als problematisch angesehen, weil sich Verschmutzungen auf Oberflächen in der Prozesskammer oder auf der zu verfestigenden Pulverschicht niederschlagen können. Außerdem können sich Rauch und Dämpfe oberhalb der zu verfestigenden Pulverschicht störend auf den Laserstrahl auswirken und dadurch den Aufschmelzvorgang des Materials mittels des Laserstrahls beeinflussen. Beispielsweise kann ein Teil der einzutragenden Laserstrahlenergie oberhalb der Pulverschicht absorbiert werden bzw. das Laserlicht wird am Rauch gestreut. Der Erfinder konnte beispielsweise beobachten, dass bei Vorhandensein von Rauch die mit dem Laser belichtete Fläche nach dem Abkühlen eine größere Rauheit aufwies als andere Flächen, bei deren Belichtung weniger Rauch vorhanden war. Die Eigenschaften des herzustellenden Objektes werden also durch das Vorhandensein von Rauch und Dämpfen in der Gasumgebung oberhalb der aktuell belichteten Fläche beeinflusst und ggf. sogar beeinträchtigt.

Die im Stand der Technik bereits angewendete Schutzgasströmung zur Entfernung von Rauch und Dämpfen kann, wie von den Erfindern durchgeführte Versuche gezeigt haben, nicht immer vollständig eine Beeinträchtigung des Laserstrahls durch Rauch und Dämpfe verhindern:
Für ein effektives Entfernen des Rauchs ist grundsätzlich eine möglichst hohe Strömungsgeschwindigkeit des Schutzgases wünsehenswert. Allerdings bewirkt eine zu hohe Strömungsgeschwindigkeit ein Verblasen des Pulvers. In der Praxis muss man daher stets einen geeigneten Kompromiss bei der Bestimmung der Strömungsgeschwindigkeit finden. Die verwendbare Strömungsgeschwindigkeit ist somit begrenzt. Typischerweise liegen Werte für die Strömungsgeschwindigkeit bei 1 bis 3 m/s auf dem Baufeld.

Die Geschwindigkeit, mit der der Laserstrahl derzeit gewöhnlich verfahren wird, liegt bei 1 bis 3 m/s oder sogar darüber. Wenn im ungünstigsten Fall die Richtung der Gasströmung und die Scanrichtung (Abtastrichtung) des Laserstrahls übereinstimmen, so kann es geschehen, dass der Laser stets die von ihm selbst erzeugte Rauchwolke durchdringen muss und sich sozusagen mit dieser mitbewegt.

Weiterhin kann es zu Turbulenzen in der Schutzgasströmung kommen. An Düsenaustritten, aber auch an Konturen und Kanten innerhalb der Fertigungsvorrichtung können sich kleine Wirbel bilden. Diese Wirbel sind nicht zwangsläufig ortsfest, sondern können sich mit der Schutzgasströmung über das Baufeld bewegen. Es wurde beobachtet, dass bestimmte Bereiche des Baufelds stärker von der Wirbelbildung betroffen sein können als andere Bereiche. Dies bedeutet, in diesen Bereichen ist die Wahrscheinlichkeit, einen Wirbel anzutreffen, höher als an anderen Orten des Baufelds. Wirbel in der Schutzgasströmung sind deshalb von Nachteil, da durch sie Rauch und Dämpfe, die bereits aus dem Wirkbereich des Laserstrahls entfernt wurden, wieder in den Wirkbereich zurücktransportiert werden könnten.

Angesichts der obigen Probleme ist es eine Aufgabe der Erfindung, eine verbesserte Vorrichtung bzw. ein verbessertes Verfahren bzw. eine entsprechend ausgebildete Steuereinheit für die schichtweise generative Fertigung von dreidimensionalen Objekten bereitzustellen. Dabei wird eine Verbesserung insbesondere bevorzugt in der Verbesserung der Bauteileigenschaften der hergestellten dreidimensionalen Objekte gesehen. Speziell bezieht sich die Verbesserung dieser Bauteileigenschaften auf eine möglichst durchgängig im gesamten Bauteil erzielte Bauteilqualität, d. h. auch in Bereichen, die nach dem Stand der Technik durch die oben beschriebenen negativen Effekte durch Spratzer, Rauch, Dämpfe o.ä. potenziell in Mitleidenschaft gezogen würden.

Die Aufgabe wird durch ein Verfahren nach Anspruch 1 und eine Vorrichtung nach Anspruch 13 sowie durch eine Steuereinheit gemäß Anspruch 14 gelöst.

Ein erfindungsgemäßes Verfahren zur Herstellung eines dreidimensionalen Objekts mittels schichtweiser Verfestigung eines pulverförmigen Aufbaumaterials durch elektromagnetische Strahlung, insbesondere Laserstrahlung, umfasst demgemäß mindestens folgende Schritte:

Abtasten von einem Querschnitt des herzustellenden Objektes entsprechenden Stellen einer aufgebrachten Schicht des pulverförmigen Aufbaumaterials mit einem elektromagnetischen Strahl aus einer Strahlungsquelle zum selektiven Verfestigen des pulverförmigen Aufbaumaterials,

Leiten eines Gasstroms über die aufgebrachte Schicht während des Abtastens mit dem elektromagnetischen Strahl und

Irregularitätsermittlung eines Vorliegens einer Prozessirregularität in Bezug auf mindestens einen Prozessparameter bei der Herstellung.

Dabei wird während des Abtastens mit dem elektromagnetischen Strahl der Abtastvorgang an mindestens einer aktuellen Stelle des zu verfestigenden Querschnitts auf Basis eines Ergebnisses der Irregularitätsermittlung unterbrochen, wobei der elektromagnetische Strahl für einen Zeitraum von höchstens 70 ms unterbrochen wird.

Die Erfindung macht es sich also zum Prinzip, eine Prozessirregularität bei der Herstellung, insbesondere während des Abtastvorgangs, zu ermitteln und auf Basis des Ermittlungsergebnisses eine Unterbrechung des Abtastvorgangs durchzuführen. Beispiele für Prozessirregularitäten sind insbesondere Folgende:

- das Auftreten bzw. das erhöhte (verstärkte) Auftreten von Partikeln wie Spratzern, Rauch, Dämpfen o.ä.
- während des Abtastens eine veränderte Strahlungsemission vom Einwirkort des elektromagnetischen Strahls auf das Aufbaumaterial, woraus sich beispielsweise auch Überhitzungen des Aufbaumaterials ableiten lassen; bei der emittierten Strahlung kann es sich z.B. um sichtbares Licht handeln; eine veränderte Strahlungsemission kann sich z.B. durch eine veränderte Spektralzusammensetzung und/oder Intensitätsfluktuationen der emittierten Strahlung bemerkbar machen
- eine große Oberflächenrauheit eines bereits verfestigten Abschnitts des herzustellenden Objekts.

Mit anderen Worten möchte die Erfindung die bislang lediglich als Störeinflüsse verstandenen Prozessirregularitäten gezielt als Indikatoren Güte des Herstellungsprozesses verwenden, auf deren Basis letzterer gesteuert bzw. geregelt wird.

Die Irregularitätsermittlung kann messtechnisch erfolgen, etwa mittels optischer Sensoren. Hierbei werden während des laufenden Herstellungsvorgangs, also insbesondere während des Abtastens einer Schicht des Aufbaumaterials, einer oder mehrere Prozessparameter z.B. durch Sensoren messtechnisch ermittelt. Als Prozessparameter seien hier lediglich beispielhaft die Eigenschaften der vom Einwirkort des elektromagnetischen Strahls auf das Aufbaumaterial emittierten Strahlung, die Spratzeranzahl und -größe, die Dichte von Rauch oder Dämpfen oberhalb des Einwirkorts oder Temperaturfluktuationen in der Schicht genannt. Alternativ oder ergänzend kann der Irregularitätsermittlung auch eine prädikative Systematik zugrunde liegen, also eine Vorhersagefunktionalität, die beispielsweise (rein) auf Basis empirischer Ausgangsdaten und/oder auf Basis von Ausgangsmesswerten das Auftreten einer Prozessirregularität während des Herstellvorgangs prognostiziert. Solche empirischen Ausgangsmesswerte können beispielsweise vorab in repräsentativen Messreihen ermittelt und in einer Messdatenbank niedergelegt sein. Ausgangsdaten hingegen sind bevorzugt solche Daten, die nicht eigens aus Messungen herrühren, sondern als eine Art "Nebenprodukte" eines für ein konkretes erfindungsgemäß durchgeführtes Verfahren repräsentativen früher bereits durchgeführten Herstellungsprozesses (oder mehrerer solcher Herstellungsprozesse) gesammelt wurden. Damit lassen sich aktuelle Prozessirregularitäten ermitteln und/oder künftige Prozessirregularitäten, auch beispielsweise mit der Aussage über Wahrscheinlichkeiten ihres tatsächlichen Auftretens, voraussagen.

Der Begriff "aktuelle Prozessirregularität" bezeichnet hierbei eine während des ablaufenden Herstellungsvorgangs, also insbesondere während des Abtastens einer Schicht des Aufbaumaterials, auftretende Prozessirregularität. Wenn davon die Rede ist, dass der Abtastvorgang an einer aktuellen Stelle des zu verfestigenden Querschnitts unterbrochen wird, dann ist damit eine Stelle des zu verfestigenden Querschnitts gemeint, an der sich der Einwirkort des zur Verfestigung verwendeten elektromagnetischen Strahls zum Zeitpunkt der Unterbrechung gerade befindet. Die Unterbrechung des Abtastens auf Basis des Ergebnisses der Irregularitätsermittlung kann direkt nach dem Eintreten (oder vorhergesagten Eintreten) des Vorliegens einer Prozessirregularität und/oder zeitversetzt danach durchgeführt werden. Im Falle einer Unterbrechung basierend auf einem lediglich prognostizierten Eintreten einer Prozessirregularität kann alternativ und/oder zusätzlich eine Unterbrechung zeitversetzt vor dem prognostizierten Eintreten der Prozessirregularität stattfinden. Mit anderen Worten bietet die Irregularitätsermittlung neben einer Information über die Art (und ggf. die Wahrscheinlichkeit) einer Prozessirregularität auch eine Zeitangabe wann die Prozessirregularität (voraussichtlich) auftritt. In Abhängigkeit von dieser Zeitangabe kann dann die Unterbrechung des Abtastens eingetaktet werden.

Mithilfe des erfindungsgemäßen Verfahrens ist es möglich, den Abtastvorgang zeitlich so zu beeinflussen, dass mögliche oder tatsächliche Störeinflüsse, die in direktem oder indirektem Zusammenhang mit einer Prozessirregularität stehen, erheblich reduziert oder gar eliminiert werden können. Dies erhöht im Endeffekt dann die Bauteilqualität des herzustellenden Objekts. Das erfindungsgemäße Verfahren ist ausschließlich für die Herstellung von dreidimensionalen Objekten mittels Verfestigens eines pulverförmigen Aufbaumaterials mit Hilfe von elektromagnetischer Strahlung, insbesondere von Laserstrahlung, geeignet. Erfindungsgemäß ist es für Verfahren geeignet, bei denen der oben erwähnte Schutzgasstrom angewandt wird. Durch diesen Gasstrom ist nämlich oft erst die Voraussetzung dafür gegeben, dass die Prozessirregularitäten innerhalb von kurzer Zeit abebben, nachdem eine Unterbrechung des Abtastens erfolgt ist.

Die Erfindung setzt sich weiterhin davon ab, den Abtastprozess im Sinne einer Art "Notabschaltung" für längere Zeit (im Rahmen von über einer Minute) zu beenden. Vielmehr ist ihr zugrunde liegender Ansatz, den Herstellungsprozess im Wesentlichen geplant weiter zu betreiben und eben nur kurzzeitig, insbesondere im Sinne der unten näher spezifizierten Unterbrechungszeiten, zu unterbrechen, nicht aber abzubrechen. Es handelt sich also um einen abbruchfreien Herstellungsprozess.

Eine erfindungsgemäße Vorrichtung zur Herstellung eines dreidimensionalen Objekts mittels schichtweiser Verfestigung eines pulverförmigen Aufbaumaterials durch elektromagnetische Strahlung, insbesondere Laserstrahlung, umfasst entsprechend:

> eine Abtasteinheit zum Abtasten von einem Querschnitt des herzustellenden Objektes entsprechenden Stellen einer aufgebrachten Schicht des pulverförmigen Aufbaumaterials mit einem elektromagnetischen Strahl aus einer Strahlungsquelle zum selektiven Verfestigen des pulverförmigen Aufbaumaterials,
> eine Gasstrom-Leiteinheit, ausgebildet zum Leiten eines Gasstroms über die aufgebrachte Schicht während des Abtastens mit dem elektromagnetischen Strahl und
> eine Irregularitätsermittlungseinheit die im Betrieb eine Irregularitätsermittlung eines Vorliegens einer Prozessirregularität in Bezug auf mindestens einen Prozessparameter bei der Herstellung durchführt,
> wobei die Vorrichtung so ausgebildet ist, dass sie während des Abtastens mit dem elektromagnetischen Strahl den Abtastvorgang an mindestens einer aktuellen Stelle des zu verfestigenden Querschnitts auf Basis eines Ergebnisses der Irregularitätsermittlung unterbricht.

Insbesondere kann für die Durchführung des erfindungsgemäßen Verfahrens eine erfindungsgemäße Steuereinheit mit einer erfindungsgemäßen Vorrichtung verwendet werden, wobei die Steuereinheit so ausgebildet ist, dass sie ein erfindungsgemäßes Verfahren durchführt.

Die Vorrichtung bzw. Steuereinheit kann erfindungsgemäß durch ein Computerprogramm gesteuert werden, das in eine programmierbare Steuereinheit ladbar ist, mit Programmcodemitteln, um alle Schritte eines erfindungsgemäßen Verfahrens auszuführen, wenn das Computerprogramm auf der erfindungsgemäßen Steuereinheit und/oder der erfindungsgemäßen Vorrichtung ausgeführt wird. Weiterbildungen der Erfindung sind in den Unteransprüchen angegeben. Dabei können Merkmale aus den Unteransprüchen und der folgenden Beschreibung zum Verfahren auch zur Weiterbildung der Vorrichtung bzw. der Steuereinheit verwendet werden oder umgekehrt, es sei denn, dies wird explizit ausgeschlossen. Bevorzugt wird der elektromagnetische Strahl für einen Zeitraum von höchstens 50ms, besonders bevorzugt höchstens 30ms und insbesondere vorzugsweise höchstens 8 ms unterbrochen. Wie unten stehend im Rahmen der Figurenbeschreibung näher ausgeführt wird, hat der Erfinder herausgefunden, dass diese Werte Zeiträume darstellen, innerhalb derer Störeffekte aufgrund einer Prozessirregularität zeitlich ausreichend abgefedert werden können. Idealerweise wird man den Zeitraum der Unterbrechung in Abhängigkeit von der Prozessirregularität wählen.

Anders herum ist es bevorzugt, dass der elektromagnetische Strahl für einen Zeitraum von mindestens 1 ms, bevorzugt mindestens 2 ms, besonders bevorzugt mindestens 10 ms unterbrochen wird. Auch diese Werte kann man in Abhängigkeit von der Art der Prozessirregularität wählen, wie unten weiter ausgeführt.

Weiterhin hat es sich als vorteilhaft erwiesen, wenn der dem Querschnitt des herzustellenden Objekts entsprechende Bereich in Abschnitte aufgeteilt wird und Abschnitt für Abschnitt mit dem elektromagnetischen Strahl abgetastet wird, wobei der elektromagnetische Strahl in mindestens einem Abschnitt entlang von Vektoren, insbesondere zueinander parallelen Vektoren, verfahren wird und der elektromagnetische Strahl zwischen der Abtastung zweier benachbarter Vektoren, bevorzugt an einem Umkehrpunkt zwischen den zwei benachbarten Vektoren, unterbrochen wird. Die Unterbrechung gezielt zwischen der Belichtung zweier solcher Vektoren, etwa im Rahmen einer sogenannten "Hatch-Belichtung", bietet den Vorteil, dass der eine Vektor noch bis zu seinem Ende abgetastet wird und die Abtastung der nächsten Vektors noch nicht begonnen wurde. Somit ist an dieser räumlichen Stelle ein besonders guter Zeitpunkt für die Unterbrechung gemäß der Erfindung.

Es kann aus zeitökonomischen Gründen außerdem von Vorteil sein, dass der elektromagnetische Strahl während des Unterbrechungszeitraums an einer anderen Stelle als der aktuellen Stelle einen Abtastvorgang durchführt. Dabei ist die aktuelle Stelle die, an der der elektromagnetische Strahl unmittelbar vor Beginn der Unterbrechung auf die Schicht einwirkte und die zumindest potenziell von der Prozessirregularität betroffen ist. Die andere Stelle ist bevorzugt so von der aktuellen Stelle beabstandet, dass sie möglichst sicher nicht von der Prozessirregularität betroffen ist. Sie kann sich an einer anderen Position des gerade in der Schicht zu verfestigenden Objektquerschnitts befinden, beispielsweise aber auch in einem Bereich liegen, in dem der Querschnitt eines anderen Objektes in der Schicht zu verfestigen ist. In diesem Zusammenhang sei hervorgehoben, dass in einem Lasersinterverfahren oder Laserschmelzverfahren, wie es dieser Anmeldung zu Grunde liegt, keine Rolle spielt, ob im Bauraum lediglich ein Objekt oder parallel mehrere Objekte hergestellt werden. Immer dann wenn in der vorliegenden Anmeldung also von der Herstellung eines Objektes gesprochen wird, ist damit implizit auch gemeint, dass die Herstellung weiterer Objekte parallel im selben Herstellvorgang wie jenem des einen Objekts nicht ausgeschlossen sein soll.

Nach Beendigung der Unterbrechung wird der elektromagnetische Strahl bevorzugt unmittelbar neben die aktuelle Stelle gerichtet, an der zuvor die Unterbrechung erfolgt war. "Unmittelbar neben der aktuellen Stelle" bedeutet insbesondere, dass sich der Einwirkungsbereich des elektromagnetischen Strahls an dieser Stelle im pulverförmigen Aufbaumaterial bis an die Grenze der aktuellen Stelle erstreckt, das also zum Beispiel ein Schmelzvorgang und/oder eine signifikante Aufheizung an der aktuellen Stelle durch die Einwirkung des elektromagnetischen Strahls an der unmittelbar daneben liegenden Stelle mitbewirkt wird. Hierdurch ist gewährleistet, dass die (potenzielle) Prozessirregularität nach Beendigung der Unterbrechung mit hoher Wahrscheinlichkeit keinen nennenswerten Effekt auf den Herstellvorgang an der aktuellen Stelle hat.

Bevorzugt wird die Unterbrechung in Abhängigkeit von aus der Prozessirregularität abgeleiteten Informationen ausgelöst, insbesondere in Abhängigkeit von diesen Informationen zeitlich gesteuert. Entsprechende Informationen umfassen beispielsweise die Signifikanz und/oder den Ort der Prozessirregularität.

Gemäß einer Ausführungsform des erfindungsgemäßen Verfahrens umfasst die Irregularitätsermittlung während der Abtastung mit dem elektromagnetischen Strahl eine Erfassung eines optischen Emissionsverhaltens von jeweils abgetasteten Stellen der Schicht des pulverförmigen Aufbaumaterials, wobei auf das Vorliegen einer Prozessirregularität entschieden wird, wenn eine signifikante Veränderung im optischen Emissionsverhalten registriert wird. Insbesondere kann die signifikante Veränderung im optischen Emissionsverhalten dann als signifikant registriert werden, wenn eine signifikante Änderung eines Prozessparameterwerts registriert wird, der eine Spektralzusammensetzung und/oder eine Intensität einer von einer abgetasteten Stelle emittierten Strahlung (z.B. sichtbaren Lichts) repräsentiert. Zugrundeliegende Prozessparameter können, wie bereits erwähnt, beispielsweise eine Spektral- und/oder Intensitätszusammensetzung und/oder eine spektralgewichtete Intensität (aus der Spektralzusammensetzung über die Zeit akkumuliert) und/oder ein zeitliches Intensitätsverhalten umfassen. Die oben genannte signifikante Veränderung bzw. die signifikante Änderung, allgemein das Vorliegen einer Signifikanz, werden bevorzugt schwellenwertbasiert ermittelt, so dass auf das Vorliegen einer Signifikanz bei Über- bzw. Unterschreiten eines im Vorhinein festgelegten Schwellenwerts entschieden wird. Ein solcher Schwellenwert liegt bevorzugt bei mindestens 10%, besonders bevorzugt mindestens 20%, speziell bevorzugt mindestens 40% Abweichung von einem vorab definierten Regulärwert bzw. Regulärwertspektrum des zugrundeliegenden Parameters, wodurch sich gemäß Auswertungen des Erfinders verlässliche Auswertungsergebnisse erzielen lassen.

Besonders im Rahmen der oben erwähnten abschnittsweisen vektorbasierten Abtastung hat es sich als vorteilhaft erwiesen, wenn der elektromagnetische Strahl während der Abtastung eines Abschnitts auf das Vorliegen einer Prozessirregularität hin mehrere Male unterbrochen wird. Diese Unterbrechungen können dann besonders kurz und gezielt erfolgen.

Im selben Zusammenhang (unabhängig von der Anzahl der Unterbrechungen) ist es bevorzugt, dass die Abschnitte zueinander parallele längliche Streifen sind und zueinander parallele Vektoren, entlang derer mindestens ein Abschnitt abgetastet wird, im Wesentlichen senkrecht zu einer Streifen-Längsrichtung liegen.

Nachfolgend wird eine Ausführungsform der Erfindung unter Bezugnahme auf die Zeichnungen beschrieben.

Fig. 1 ist eine schematische, teilweise im Schnitt dargestellte Ansicht einer Vorrichtung zum schichtweisen Herstellen eines dreidimensionalen Objekts, die zum Durchführen der vorliegenden Erfindung geeignet ist.

Fig. 2 ist eine schematische Draufsicht auf eine zu verfestigende Pulverschicht in der in Fig. 1 gezeigten Lasersintervorrichtung, wobei schematisch gezeigt ist, wie der Laserstrahl zum Verfestigen des Pulvers über die Pulverschicht geführt wird.

Fig. 3 zeigt einen Vergleich der Lichtemissionen bei einem Prozessablauf ohne Rauchentwicklung (linke Seite) und einem Prozessablauf mit starker Rauchentwicklung (rechte Seite).

Fig. 4 ist ein Ablaufdiagramm eines Ausführungsbeispiels einer erfindungsgemäßen Regelung in einem Verfahren zum schichtweisen Herstellen eines dreidimensionalen Objekts.

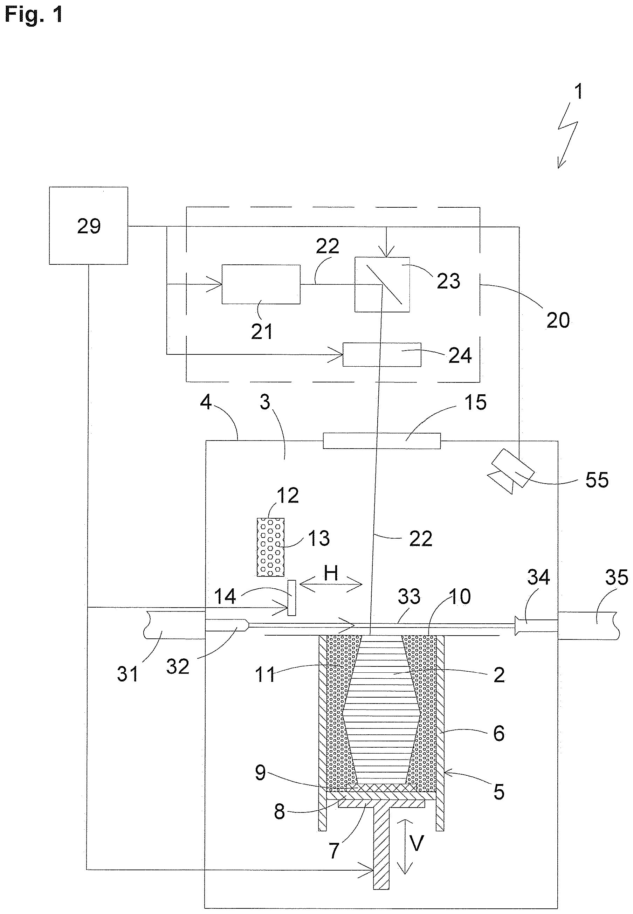

Im Folgenden wird mit Bezug auf Fig. 1 eine Vorrichtung 1 gemäß einer Ausführungsform der vorliegenden Erfindung beschrieben. Die in Fig. 1 dargestellte Vorrichtung ist eine Lasersinter- oder Laserschmelzvorrichtung 1. Zum Aufbauen eines Objekts 2 enthält sie eine Prozesskammer 3 mit einer Kammerwandung 4.

In der Prozesskammer 3 ist ein nach oben offener Behälter 5 mit einer Wandung 6 angeordnet. In dem Behälter 5 ist ein in einer vertikalen Richtung V bewegbarer Träger 7 angeordnet, an dem eine Grundplatte 8 angebracht ist, die den Behälter 5 nach unten abschließt und damit dessen Boden bildet. Die Grundplatte 8 kann eine getrennt von dem Träger 7 gebildete Platte sein, die an dem Träger 7 befestigt ist, oder sie kann integral mit dem Träger 7 gebildet sein. Wie in Fig. 1 gezeigt, kann je nach verwendetem Pulver und Prozess auf der Grundplatte 8 noch eine Bauplattform 9 angebracht sein, auf der das Objekt 2 aufgebaut wird. Das Objekt 2 kann aber auch auf der Grundplatte 8 selber aufgebaut werden, die dann als Bauplattform dient. In Fig. 1 ist das in dem Behälter 5 auf der Bauplattform 9 zu bildende Objekt 2 unterhalb einer Arbeitsebene 10 in einem Zwischenzustand dargestellt mit mehreren verfestigten Schichten, umgeben von unverfestigt gebliebenem Aufbaumaterial 11.

Die Lasersintervorrichtung 1 enthält weiter einen Vorratsbehälter 12 für ein durch elektromagnetische Strahlung verfestigbares pulverförmiges Aufbaumaterial 13 und einen in einer horizontalen Richtung H bewegbaren Beschichter 14 zum Aufbringen des Aufbaumaterials 13 auf die Arbeitsebene 10. Der Vorratsbehälter 12 kann auch seitlich neben dem Behälter 5 angeordnet sein. Ferner enthält die Wandung 4 der Prozesskammer 3 an ihrer Oberseite ein Einkoppelfenster 15 für die zum Verfestigen des Pulvers 13 dienende Strahlung 22.

Die Lasersintervorrichtung 1 enthält ferner als Abtasteinheit 20 eine Belichtungsvorrichtung mit einem Laser 21, der einen Laserstrahl 22 erzeugt, der über eine Umlenkvorrichtung 23 umgelenkt und durch eine Fokussiervorrichtung 24 über das Einkoppelfenster 15 auf die Arbeitsebene 10 fokussiert wird.

Weiter enthält die Lasersintervorrichtung 1 eine Steuereinheit 29, über die die einzelnen Bestandteile der Vorrichtung 1 in koordinierter Weise zum Durchführen des Bauprozesses gesteuert werden. Die Steuereinheit kann eine CPU enthalten, deren Betrieb durch ein Computerprogramm (Software) gesteuert wird. Die Steuereinheit 29 ist signaltechnisch verbunden mit einem Sensor 55, im vorliegenden Ausführungsbeispiel einem optischen Sensor in Form eines Photodiodensensors. Gemeinsam mit dem Sensor 55 bildet die Steuereinheit 29 eine Irregularitätsermittlungseinheit, in der auf Basis von Messwerten des Sensors und/oder von anderen Simulationswerten das (wahrscheinliche) Vorliegen einer Prozessirregularität ermittelt wird.

Zum Erzeugen eines (bevorzugt im Wesentlichen laminaren) Gasstroms 33 in der Prozesskammer 3 enthält die Lasersintervorrichtung 1 ferner einen Gaszuführkanal 31, eine Gaseinlassdüse 32, eine Gasabsaugdüse 34 und einen Gasabführkanal 35. Der Gaszuführkanal 31, die Gaseinlassdüse 32, die Gasabsaugdüse 34 und der Gasabführkanal 35 bilden im vorliegenden Ausführungsbeispiel eine Gasstrom-Leiteinheit. Auch die Gaszufuhr und -abfuhr kann von der Steuereinheit 29 gesteuert sein. Das aus der Prozesskammer 3 abgesaugte Gas kann einer (nicht gezeigten) Filtervorrichtung zugeführt werden, und das gefilterte Gas kann über den Gaszuführkanal 31 wieder der Prozesskammer 3 zugeführt werden, wodurch ein Umluftsystem mit einem geschlossenen Gaskreislauf gebildet wird. Statt lediglich einer Gaseinlassdüse 32 und einer Gasabsaugdüse 34 können jeweils auch mehrere Düsen vorgesehen sein.

Im Betrieb wird zunächst zum Aufbringen einer Pulverschicht der Träger 7 um eine Höhe abgesenkt, die bevorzugt der gewünschten Schichtdicke entspricht. Unter Verwendung des Beschichters 14 wird nun eine Schicht des pulverförmigen Aufbaumaterials 13 aufgetragen. Die Aufbringung erfolgt vorzugsweise über das gesamte Baufeld, welches der Teil der Arbeitsebene 10 innerhalb des Behälters 5 ist.

Anschließend wird der Querschnitt des herzustellenden Objekts 2 von dem Laserstrahl 22 abgetastet (also belichtet), so dass das pulverförmige Aufbaumaterial 13 an diesen Stellen verfestigt wird. Diese Schritte werden solange wiederholt, bis das Objekt 2 fertiggestellt ist und dem Bauraum entnommen werden kann. Beim Herstellen des dreidimensionalen Objekts 2 durch Verfestigen des pulverförmigen Aufbaumaterials 11 trägt der Laserstrahl 22 lokal Energie in das Aufbaumaterial 11 ein, so dass Pulverkörner miteinander versintern oder aber das Pulvermaterial 11 lokal vollständig aufgeschmolzen wird, woraufhin das Aufbaumaterial 11 nach dem Abkühlen zu einer festen Struktur erstarrt.

Während des Aufbaus des Objekts 2 wird ein Gas, vorzugsweise ein Schutzgas, beispielsweise Argon und/oder Stickstoff, durch die Gaseinlassdüse 32 in die Prozesskammer 3 eingeleitet und durch die Gasabsaugdüse 34 wieder aus ihr abgesaugt.

Beim Abtasten der zu verfestigenden Abschnitte einer Schicht mittels des Laserstrahls 22 wird mindestens eine Pause eingelegt, d.h. der Abtastvorgang unterbrochen, und zwar auf Basis einer zuvor (oder aktuell) in einer Irregularitätsermittlung ermittelten Prozessirregularität. Eine Pause ist hier charakterisiert als Zeitraum während der Belichtung, innerhalb dessen der Laserstrahl 22 unterbrochen ist, sei es durch Abschalten des Lasers oder Lenken des Laserstrahls zu einer anderen Stelle, insbesondere außerhalb der Arbeitsebene 10. Während der Unterbrechung des Laserstrahls 22 kann auch die Umlenkvorrichtung 23 inaktiv sein, so dass nach dem Ende der Pause der Laserstrahl 22 unmittelbar neben der Stelle auf die Pulverschicht auftrifft, an der vor der Pause zuletzt eine Verfestigung mittels des Laserstrahls 22 stattfand.

Im Hinblick auf die Homogenität der erzielten Bauteile hat das erfinderische Vorgehen folgenden Vorteil: Ein Beispiel einer Prozessirregularität ist das Auftreten von Spratzern bzw. Rauch bzw. Dämpfen oder ähnlicher Partikel (nachfolgend ist stellvertretend immer nur von Rauch die Rede). Während der Pause kann solcher Rauch über der zuletzt belichteten Stelle der Pulverschicht abziehen. Bei Wiederaufnahme der Belichtung nach der Pause kann daher der Verfestigungsvorgang ohne die störenden Einflüsse des Rauchs fortgesetzt werden.

Würde man versuchen, durch Verringern der Scangeschwindigkeit (Abtastgeschwindigkeit) des Laserstrahls, dem Problem des zu langsam abziehenden Rauchs zu begegnen, so hätte dies zur Folge, dass durch die Abänderung der Scangeschwindigkeit (sofern die Laserleistung konstant ist) der in das Material eingetragene Energiebetrag erhöht wird. Beim Lasersintern und ähnlichen Verfahren ist die Größe "Flächenenergie" in [J/mm$^2$] bekannt, welche die eingestrahlte Energie in Joule pro Fläche angibt. Aus der Beziehung

$$\text{Flächenenergie } [J/mm^2] = \text{Laserleistung} / (\text{Scangeschwindigkeit x Hatchabstand})$$

ist ersichtlich, dass mit abnehmender Scangeschwindigkeit die eingetragene Flächenenergie zunimmt. Bei dem einzutragenden Energiebetrag handelt es sich aber um eine diffizile Regelgröße. Deshalb ist das erfindungsgemäße Vorgehen von Vorteil, da durch das Einfügen von Pausen der Flächenenergieeintrag nicht verändert werden muss. Der Hatchabstand wird in diesem Zusammenhang als der Abstand zwischen zwei benachbarten Vektoren verstanden, entlang derer die Abtastung durch den elektromagnetischen Strahl erfolgt.

Das erfindungsgemäße Verfahren hat nicht nur bezüglich der Beeinträchtigung der Prozessgenauigkeit durch Rauchentwicklung Vorteile. Durch das Einfügen von Pausen ist es auch möglich, lokalen Überhitzungsvorgängen im Bauteil zu begegnen, die durch Berücksichtigung anderer Prozessirregularitäten ermittelt werden können. So können z.B. Temperaturen an bestimmten Stellen im Bauraum durch direkte oder indirekte Temperaturmessung ermittelt werden, z. B. unter Zuhilfenahme eines Punktpyrometers.

Normalerweise wird die bei der Fertigung eines dreidimensionalen Objekts lokal zur Verfestigung des Pulvers eingebrachte Wärme durch das bereits vorhandene Teilobjekt mittels Wärmeleitung abgeleitet. Je nachdem, wie "massiv" das Bauteil ist, ist die Wärmeableitung besser oder schlechter. Gerade in filigranen Strukturen ist die Wärmeableitung schlechter. Filigrane Strukturen sind auch deshalb besonders sensibel, weil bei diesen Strukturen die "Belichtungs-Wiederholzeit", d.h. die Zeit, bis der Laserstrahl wieder in die Nachbarschaft eines gerade belichteten Orts zurückkommt, kurz ist. Filigrane Bereiche eines Bauteils sind daher für Überhitzungseffekte besonders anfällig.

Durch das Einfügen von Belichtungspausen in Abhängigkeit von entsprechend ermittelten Prozessirregularitäten wird hier mehr Zeit zum Ableiten der Wärme zur Verfügung gestellt, so dass die Gefahr von lokalen Überhitzungen verringert ist.

Die Länge einer Belichtungspause liegt im Hinblick auf einen hinreichenden Rauchabzug bei einer oder mehreren Millisekunden, bevorzugt bei mindestens 2 ms und/oder höchstens 8 ms. Die zu wählende Pausendauer kann dabei in Abhängigkeit vom Betrag der Strömungsgeschwindigkeit des Gasstroms 33 bestimmt werden. Beträgt beispielsweise die Strömungsgeschwindigkeit 2 m/s und die Dauer der Pause 2 ms, dann kann innerhalb der Pause der Rauch um eine Strecke der Länge

$$L = \textit{Pausendauer x Strömungsgeschwindigkeit} = 4 \text{ mm}$$

weiterziehen. Mit solch einem Abstand des Rauchs zu der Stelle, an der der Belichtungsvorgang fortgesetzt wird, wird der Prozess nicht mehr signifikant gestört.

Im Hinblick auf die Überhitzungsproblematik ist eine Pausenzeit von einer oder mehreren zehn Millisekunden von Vorteil, bevorzugt von mindestens 10 ms und/oder von höchstens 70 ms, noch bevorzugter von höchstens 30 ms. Die Länge der Pausendauer hängt in diesem Fall beispielsweise von der bereits oben erwähnten "Belichtungs-Wiederholzeit" ab.

Die Pausen können grundsätzlich als fester Parameter in den Belichtungsablauf aufgenommen werden. Beispielsweise können bei (auch vorhergesagtem) Vorliegen einer Prozessirregularität Pausen definierter Länge mit einem im Vorhinein definierten zeitlichen Abstand zueinander in den Belichtungsvorgang für eine teilweise zu verfestigende Pulverschicht eingefügt werden. In solch einem Fall erfolgt das Einfügen der Pausen automatisch durch die Steuereinheit 29, welche den Laserstrahl 22 und die Umlenkvorrichtung 23 und gegebenenfalls eine nicht in Fig. 1 gezeigte Strahlablenkvorrichtung zum Weglenken des Energiestrahls vom Baufeld steuert.

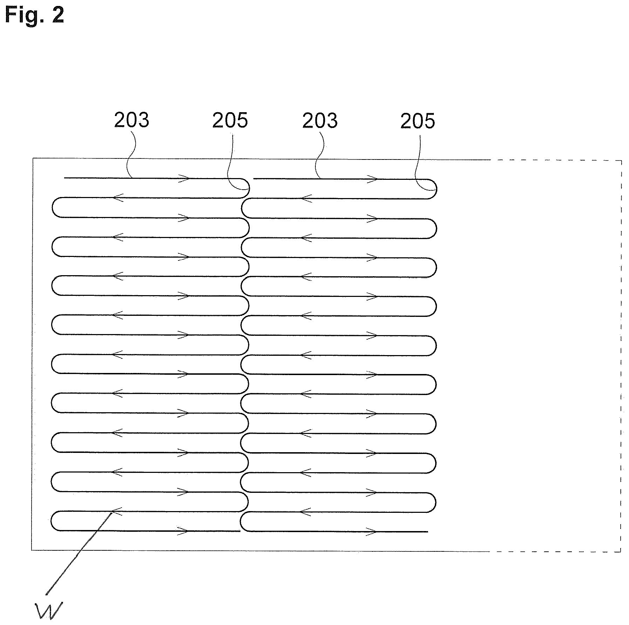

Nachfolgend wird anhand von Fig. 2 ein Verfahren vorgestellt, bei dem im Vorhinein festgelegte Pausen in besonders günstiger Weise in den Verfahrensablauf eingefügt werden:

Fig. 2 zeigt eine Draufsicht auf einen zu verfestigenden Abschnitt einer Pulverschicht, wobei der zu verfestigende Abschnitt der Einfachheit halber rechteckig dargestellt ist. In Fig. 2 sind zwei nebeneinander liegende Streifenabschnitte 203 dargestellt, innerhalb derer der Laserstrahl mäanderförmig über die Schicht bewegt wird. Die einzelnen zueinander parallelen Bewegungslinien innerhalb eines Streifenabschnitts 203 werden hier als Vektoren W bezeichnet.

Aus Gründen der Einfachheit sind lediglich zwei solche Streifenabschnitte gezeigt. Bei dem nun beschriebenen Verfahren soll zumindest ein Teil des Bereichs einer Pulverschicht, der verfestigt werden soll, mit solchen zueinander parallelen Streifenabschnitten 203 bei der Laserstrahlbelichtung überdeckt werden. Bei der Belichtung wird dabei bevorzugt so vorgegangen, dass die Streifenabschnitte 203 zeitlich nacheinander belichtet werden.

Im Grenzbereich zweier benachbarter Streifenabschnitte 203 findet eine Umkehr 205 der Bewegungsrichtung des Laserstrahls während des Belichtungsvorgangs eines Streifenabschnitts 203 statt. Da bei der Bewegungsumkehr 205 eine Umkehrbewegung der Ablenkspiegel in der Umlenkvorrichtung 23 stattfindet, wird der Laserstrahl 22 bei der Bewegungsumkehr 205 abgeschaltet. Diese Abschaltdauer liegt bei derzeit gängigen Herstellungsverfahren bei ca. 0,3 ms, wobei dies von Rahmenparametern des Prozesses und der Vorrichtung abhängig ist (die Bandbreite liegt derzeit bei 0,1 bis 0,6 ms). In vorteilhafter Weise kann daher während der Bewegungsumkehr 205 des Laserstrahls 22 die Abschaltdauer des Lasers einfach verlängert werden, so dass die Belichtungspause genau an der Stelle der Bewegungsumkehr 205 stattfindet. Da an der genannten Stelle sowieso eine sehr kurze Pause vorhanden ist, ist der Steuerungsaufwand für das Einfügen der erfindungsgemäßen zusätzlichen Pause nicht so groß.

Es sei darauf hingewiesen, dass die Pausen natürlich nicht bei jeder Umkehr 205 der Bewegungsrichtung des Laserstrahls 22 in Fig. 2 stattfinden müssen. Vielmehr könnte die Belichtungspause auch nur bei jeder zweiten Bewegungsumkehr 205, jeder dritten Bewegungsumkehr 205, etc. stattfinden. Eine Obergrenze liegt in der Gesamtzahl der während der Belichtung eines Streifenabschnitts 203 auftretenden Bewegungsumkehrvorgänge 205.

Es sei noch betont, dass die Bereichsabschnitte 203 nicht notwendigerweise streifenförmig sein müssen. In der Regel wird ein zu verfestigender Objektquerschnitt nicht rechteckförmig sein. Grenzt in solch einem Fall ein Bereichsabschnitt 203 an den Rand des Objektquerschnitts, so wird seine Gestalt oftmals von der Form eines rechteckigen Streifens abweichen. Weiterhin sind insbesondere auch quadratische Bereichsabschnitte 203 möglich. Schließlich ist es auch möglich, jeweils ein kleines Gebiet innerhalb eines Bereichsabschnitts 203 zu belichten und dann die Belichtung in einem anderen Bereichsabschnitt 203 fortzusetzen.

Während des "Sprungs" des Laserstrahls zu dem anderen Bereichsabschnitt 203 kann dann die erfindungsgemäße Pause eingefügt werden.

Obwohl durch die beschriebene Einfügung von Pausen eine Verbesserung der Bauteilqualität im Hinblick auf Oberflächenqualität und Homogenität beobachtet werden kann, muss dennoch berücksichtigt werden, dass sich durch die Pausen natürlich auch die Belichtungsdauer für eine Schicht verlängert und dadurch die Gesamtherstellungszeit für ein Objekt verlängert. Daher sollten die erfindungsgemäßen Belichtungspausen bevorzugt nur dann in den Belichtungsablauf integriert werden, wenn solche Pausen tatsächlich erforderlich sind. In diesem Zusammenhang sind auch die bevorzugten zeitlichen Obergrenzen der Pausen zu verstehen. Mit anderen Worten werden die Pausen bevorzugt gezielt auf den Prozess des Verfestigens von pulverförmigem Aufbaumaterial mittels elektromagnetischer Strahlung, insbesondere Laserstrahlung, hin optimiert und entsprechend kurz gewählt. Dabei werden insbesondere die thermischen Effekte und/oder die Absaugeffekte des über die aufgebrachte Schicht geleiteten Gasstroms mit berücksichtigt bzw. vorteilhaft genutzt.

Eine erste Herangehensweise ist hier, prädiktiv - also anhand von Vorhersagemodellen - festzulegen, wann und wo Belichtungspausen eingefügt werden sollen. Beispielsweise könnte durch Beobachtungen an bereits stattgefundenen Herstellungsvorgängen in einer erfindungsgemäßen Vorrichtung zur Herstellung eines dreidimensionalen Objekts, ermittelt werden, an welchen Stellen oberhalb der Arbeitsebene 10 es besonders häufig zu Prozessirregularitäten, etwa zu einer Wirbelbildung im Gasstrom 33, kommt. Belichtungspausen würden dann genau bei der Belichtung von Stellen in Bereichen solcher häufiger Wirbelbildung (bzw. anderer Prozessirregularitäten) eingefügt werden.

Eine weitere Möglichkeit zur Gewinnung eines Vorhersage-Modells ist die mathematische Modellierung des Bauvorgangs. Beispielsweise sind bei einem Lasersinterverfahren oder Laserschmelzverfahren die Gestalt des herzustellenden Objekts und seine Lage im Pulverbett während der Herstellung im Vorhinein bekannt. Insbesondere hinsichtlich der Prozessirregularität der lokalen Überhitzung kann daher im Vorhinein ermittelt werden, welche Stellen des herzustellenden Objekts besonders anfällig in Bezug auf eine Überhitzung sind. Da bei Kenntnis des Pulvermaterials auch die physikalischen Eigenschaften des herzustellenden Objekts, insbesondere die Wärmeleitungseigenschaften im Wesentlichen im Vorhinein bekannt sind, kann berechnet werden, an welchen Stellen bei dem Herstellungsvorgang entstehende Wärme besonders schlecht durch den bereits hergestellten Teil des Objekts abgeleitet werden kann. Als Folge können erfindungsgemäße Belichtungspausen gerade bei der Herstellung der besonders gefährdeten Objektbereiche (beispielsweise filigrane Objektabschnitte) eingefügt werden. Bereits vor dem Start des Herstellungsvorgangs kann also die Steuervorrichtung 29 so eingestellt werden, dass die Belichtungspausen genau an den gewünschten Stellen in den Bauvorgang eingefügt werden.

Alternativ oder ergänzend zum Einfügen von Belichtungspausen auf der Grundlage von Vorhersage-Modellen ist eine Steuerung bzw. gar Regelung des Belichtungsprozesses auf der Grundlage von Echtzeit-Informationen über den Prozessablauf. Hierzu muss beispielsweise die Rauchentwicklung während des Belichtungsvorgangs oder auch eine lokale Überhitzung detektiert werden und durch Einfügen von Prozesspausen einer übermäßigen Rauchentwicklung oder lokalen Überhitzung entgegengesteuert werden.

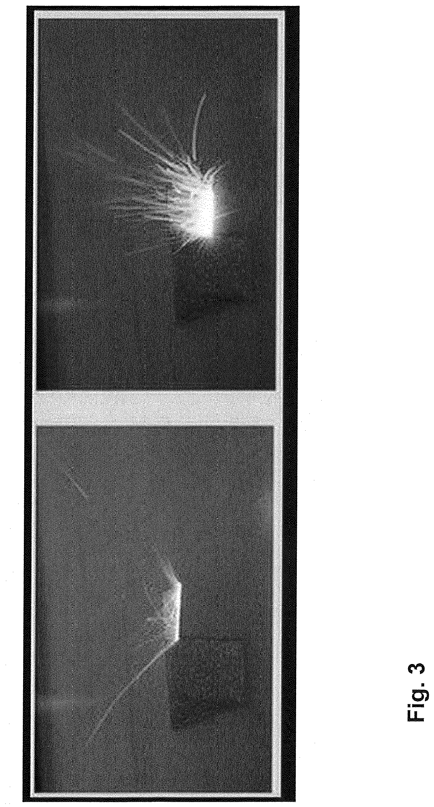

Es wurde beobachtet, dass eine übermäßige Rauchentwicklung Änderungen in der Lichtemission hervorruft, die normalerweise von einem Schichtbereich ausgeht, auf den aktuell der Laser einwirkt bzw. auf den kurz vorher der Laser einwirkte ("Prozessleuchten"). Fig. 3 zeigt einen Vergleich der Lichtemissionen bei einem Prozessablauf im Wesentlichen ohne Rauchentwicklung (linke Seite) und einem Prozessablauf mit starker Rauchentwicklung (rechte Seite). Man erkennt, dass es begleitend zur übermäßigen Rauchentwicklung auch zu vermehrtem Spratzen kommt.

Durch eine insbesondere optische Überwachung des Einwirkbereichs des Laserstrahls können daher Variationen der Lichtemission automatisch erfasst werden und für eine Entscheidung, ob mit dem Einfügen einer Belichtungspause reagiert werden soll oder nicht, verwendet werden. Zum besseren Verständnis sei noch hinzugefügt, dass die Lichtemission normalerweise von dem Schmelzebad des in Folge der Lasereinwirkung aufgeschmolzenen Pulvers ausgeht, weshalb die Überwachung der Lichtemissionen auch als "Melt Pool Monitoring" bezeichnet wird.

Beispielsweise kann die optische Überwachung mittels Photodioden implementiert werden, die die notwendige hohe Prozessierungsgeschwindigkeit bei der Auslese der optischen Informationen gewährleisten. Auch andere Messvorrichtungen können verwendet werden, insbesondere wenn diese genügend schnell eine Information über Änderungen der Lichtemission liefern können. Als geeignete Zeitauflösung haben sich Messungen alle 30 bis 50 Mikrosekunden erwiesen, also eine Bandbreite von in etwa 30 kHz, was mit Photodioden technisch erreichbar ist. Die Photodioden können als Sensor 55 oberhalb der Arbeitsebene 10 in der Prozesskammer 3 angebracht sein oder aber außerhalb der Prozesskammer, wobei dann über einen Strahlteiler eine Einkopplung in den optischen Pfad des Laserstrahls stattfindet, so dass Lichtstrahlung über denselben optischen Weg über die Ablenkvorrichtung 23, den auch der Laserstrahl nimmt, beobachtet werden kann.

Die Weiterverarbeitung der von den Lichtsensoren (z.B. Photodioden) gelieferten Informationen kann in dem Fachmann bekannter Weise geschehen und wird deshalb hier nicht im Detail beschrieben. Beispielsweise können mittels einer Fourier-Analyse (z.B. einer schnellen Fourier-Transformation, englisch FFT), einer Wavelet-Transformation oder anderen mathematischen Analysemethoden schnelle Schwankungen der Signalamplitude, die auf einen spratzigen Prozess hindeuten, ermittelt werden. Darüber hinaus ist auch die Beobachtung des Signals im Zeitraum (engl.: time domain) für die Beurteilung des Prozesses nutzbar. Änderungen der Lichtemission sind weiterhin auch über eine Kurzzeit-Fourier-Transformation erfassbar, indem die zeitliche Änderung des Frequenzspektrums des Signals analysiert wird. Wichtig ist, dass auf der Grundlage der von der Messvorrichung (also des Sensors) gelieferten Information durch die Steuervorrichtung 29 in kürzester Zeit (vorzugsweise in weniger als 10 ms, bevorzugt weniger als 1 ms) entschieden werden kann, ob eine Pause beim Belichten mit dem Laserstrahl eingefügt werden soll.

Auch lokale Überhitzungen führen zu einer Veränderung der Lichtemission. So tritt bei überhitzten Bereichen des Objekts ein Nachglühen (ca. eine halbe Sekunde) auf, so dass bei Einwirkung des Laserstrahls auf Pulver über überhitzten Bereichen mehr Licht emittiert wird. Daneben treten Verfärbungen des neu aufgetragenen Pulvers über überhitzten Bereichen in der darunterliegenden Schicht auf. Diese Verfärbungen lassen sich über eine Spektralanalyse und/oder eine Analyse einer Intensitätsänderung des emittierten Lichts detektieren. Durch eine optische Analyse das Laserstrahl-Einwirkungsbereichs kann also ebenfalls in Echtzeit erfasst werden, ob überhitzte Bereiche vorliegen.

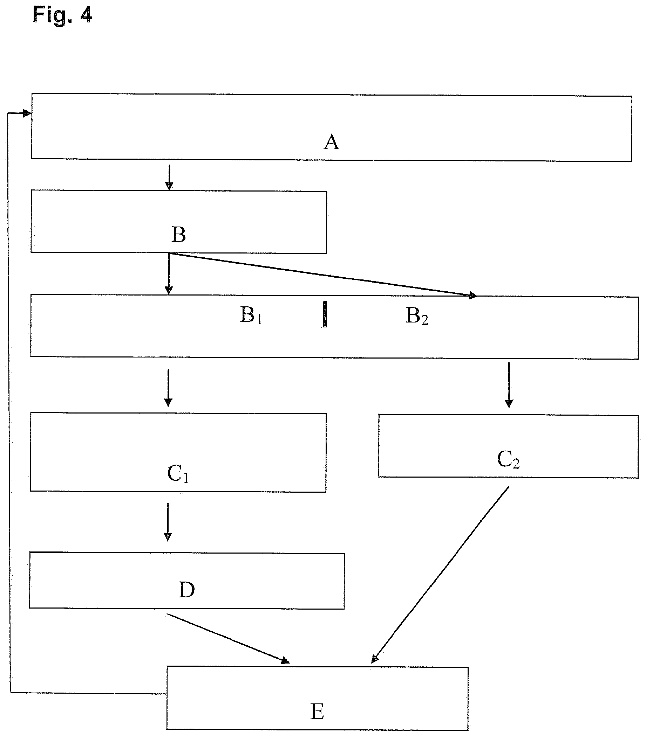

Fig. 4 zeigt ein Blockdiagramm zur Veranschaulichung eines generativen Herstellungsverfahrens, in dem eine erfindungsgemäße Regelung stattfindet. Es wird hier angenommen, dass es sich um einen Herstellungsprozess handelt, bei dem Metallpulver verarbeitet wird und durch selektives Aufschmelzen des Pulvers ein dreidimensionales Objekt generiert wird (auch als DMLS - Direct Metal Laser Sintering bezeichnet). In einem Schritt A wird also ein Lasersinter bzw. Laserschmelzverfahren mit laufender (hier optischer) Überwachung des Prozesses - hier der Überwachung des Schmelzebades am Laserstrahlauftreffpunkt- durchgeführt. Zur Überwachung des Herstellungsvorgangs wird also mittels einer Anzahl Photodioden laufend das Schmelzebad am Laserstrahlauftreffpunkt optisch erfasst und in einem Schritt B durch Analyse der Variationen in der Lichtemission/der Spektralverteilung eine Entscheidung getroffen, ob eine Prozessirregularität vorliegt. Falls eine Prozessirregularität vorliegt, wird eine Fallunterscheidung vorgenommen. Je nach Art der Variation der Lichtemission wird entschieden, ob gemäß einer ersten Erkennung $B_1$ Rauchentwicklung oder gemäß einer zweiten Erkennung $B_2$ lokale Überhitzung als Ursache für die Prozessirregularität vorliegt.

Abhängig davon, welche Art von Prozessirregularität vorliegt, wird dann entschieden, welche Art von Belichtungspausen einzufügen sind. Im Fall $B_1$ der Prozessirregularität "Rauchentwicklung" wird beispielsweise in einem Schritt $C_1$ eine Abfolge von kurzen Belichtungspausen (jeweils 2 bis 4 Millisekunden) bei jedem Richtungswechsel des Laserstrahls eingefügt. Die Anzahl der Belichtungspausen kann dabei in einem optionalen Schritt D von einem Abbruchkriterium für die Einfügung von Belichtungspausen abhängig gemacht werden:
Es sind beispielsweise folgende Abbruchkriterien denkbar:

- Die optische Überwachung detektiert eine Beendigung der Prozessirregularität;

- Nachdem im Vorhinein eine Höchstzahl an Belichtungspausen festgelegt wurde, werden nach Einfügen dieser Höchstzahl von Belichtungspausen keine Belichtungspausen mehr eingefügt;

- Unter der Annahme, dass in der aktuellen Pulverschicht ein zu verfestigender Bereich abschnittsweise (beispielsweise streifenweise, wie in Fig. 2 gezeigt) belichtet wird, wird das Einfügen von Pausen beendet, sobald der aktuelle Abschnitt (Streifen) vollständig belichtet ist.

Falls der Fall $B_2$ "lokale Überhitzung" als Prozessirregularität festgestellt wurde, genügt es in der Regel, in einem Schritt $C_2$ eine längere Belichtungspause (größer oder gleich 10 Millisekunden) einzufügen, damit sich das Bauteil lokal abkühlen kann.

In jedem Fall wird der Herstellvorgang nach Erreichen des Abbruchkriteriums normal in einem Schritt E ohne weitere Belichtungspausen fortgesetzt, bis erneut eine Prozessirregularität detektiert wird. Natürlich ist es auch möglich, im Fall der Detektion von Rauch lediglich eine längere Belichtungspause von 10 Millisekunden oder mehr einzufügen und im Fall der Detektion von lokaler Überhitzung mehrere Belichtungspausen hintereinander wie beschrieben einzufügen. Die Höchstzahl für die hintereinander einzufügenden Belichtungspausen kann beispielsweise ein Wert zwischen 2 und 20 sein. Weitere Belichtungspausen werden bevorzugt nicht eingefügt, wenn die Belichtung eines Abschnitts (beispielsweise eines in Fig. 2 gezeigten Streifenabschnitts 203) beendet ist.

Weiterhin wurde in Fig. 4 ein Prozessablauf dargestellt, bei dem eine Prozessüberwachung sowohl hinsichtlich Rauchbildung als auch lokaler Überhitzung stattfindet. Natürlich ist es auch möglich, in einem vereinfachten Prozessablauf mit Regelung lediglich eine Überwachung der Rauchentwicklung oder lediglich eine Überwachung hinsichtlich lokaler Überhitzungen durchzuführen.

Bei dem im erfindungsgemäßen Verfahren zu verwendenden pulverförmigen Baumaterial kann es sich um Kunststoffpulver, Keramikpulver oder Metallpulver oder Mischpulver (z.B. kunststoffummanteltes Metallpulver) handeln. Besonders geeignet ist das erfindungsgemäße Verfahren aber in Zusammenhang mit Metallpulver, da infolge der hohen Temperaturen beim Bauprozess hier Rauchbildung, Überhitzungseffekte und Prozessleuchten am Häufigsten auftreten.

Bei Verwendung der oben beschriebenen Prozessregelung muss nicht unbedingt auf Sensoren zurückgegriffen werden, die für sichtbares Licht sensitiv sind. Ebenso kann auch von der Einwirkstelle des Energiestrahls emittierte Strahlung in anderen Spektralbereichen (beispielsweise im Infraroten) detektiert werden.

## Patentansprüche

1.  Verfahren zur Herstellung eines dreidimensionalen Objekts (2) mittels schichtweiser Verfestigung eines pulverförmigen Aufbaumaterials (11) durch elektromagnetische Strahlung, insbesondere Laserstrahlung, mit den Schritten:

    Abtasten von einem Querschnitt des herzustellenden Objektes (2) entsprechenden Stellen einer aufgebrachten Schicht des pulverförmigen Aufbaumaterials (11) mit einem elektromagnetischen Strahl (22) aus einer Strahlungsquelle (21) zum selektiven Verfestigen des pulverförmigen Aufbaumaterials (11),
    Leiten eines Gasstroms (33) über die aufgebrachte Schicht während des Abtastens mit dem elektromagnetischen Strahl (22) und
    Irregularitätsermittlung eines Vorliegens einer Prozessirregularität in Bezug auf mindestens einen Prozessparameter bei der Herstellung,
    wobei während des Abtastens mit dem elektromagnetischen Strahl (22) der Abtastvorgang an mindestens einer aktuellen Stelle des zu verfestigenden Querschnitts auf Basis eines Ergebnisses der Irregularitätsermittlung unterbrochen wird, wobei der elektromagnetische Strahl (22) für einen Zeitraum von höchstens 70ms unterbrochen wird, und

wobei eine Prozessirregularität ein Auftreten und/oder ein erhöhtes Auftreten von Partikeln wie Spratzern, Rauch, Dämpfen o.ä. ist und/oder eine während des Abtastens veränderte Strahlungsemission von einem Einwirkort des elektromagnetischen Strahls auf das Aufbaumaterial ist und/oder eine große Oberflächenrauheit eines bereits verfestigten Abschnitts des herzustellenden Objekts ist.

2. Verfahren gemäß Anspruch 1, bei dem der elektromagnetische Strahl (22) für einen Zeitraum von höchstens 50ms, bevorzugt höchstens 30ms und besonders bevorzugt höchstens 8 ms unterbrochen wird.

3. Verfahren gemäß Anspruch 1 oder 2, bei dem der elektromagnetische Strahl (22) für einen Zeitraum von mindestens 1ms, bevorzugt mindestens 2 ms, besonders bevorzugt mindestens 10 ms unterbrochen wird.

4. Verfahren gemäß einem der Ansprüche 1 bis 3, bei dem
der elektromagnetische Strahl (22) während der Unterbrechung an einer anderen Stelle als der aktuellen Stelle einen Abtastvorgang durchführt.

5. Verfahren gemäß einem der Ansprüche 1 bis 4, bei dem
der elektromagnetische Strahl (22) nach Beendigung der Unterbrechung unmittelbar neben die aktuelle Stelle gerichtet wird, an der zuvor die Unterbrechung erfolgt war.

6. Verfahren gemäß einem der Ansprüche 1 bis 5, bei dem
die Unterbrechung in Abhängigkeit von aus der Prozessirregularität abgeleiteten Informationen ausgelöst wird, insbesondere in Abhängigkeit von aus der Prozessirregularität abgeleiteten Informationen zeitlich gesteuert wird.

7. Verfahren gemäß einem der Ansprüche 1 bis 6, bei dem
die Irregularitätsermittlung während der Abtastung mit dem elektromagnetischen Strahl (22) eine Erfassung eines optischen Emissionsverhaltens von jeweils abgetasteten Stellen der Schicht des pulverförmigen Aufbaumaterials (11) umfasst und auf das Vorliegen einer Prozessirregularität entschieden wird, wenn eine signifikante Veränderung im optischen Emissionsverhalten registriert wird.

8. Verfahren gemäß Anspruch 7, bei dem
die Veränderung im optischen Emissionsverhalten dann als signifikant registriert wird, wenn eine signifikante Änderung eines Parameterwerts registriert wird, der eine Spektralzusammensetzung und/oder eine Intensität einer von einer abgetasteten Stelle emittierten Strahlung, insbesondere sichtbarem und/oder nah-infrarotem Licht, repräsentiert.

9. Verfahren gemäß Anspruch 8, bei dem
die signifikante Veränderung und/oder die signifikante Änderung schwellenwertbasiert ermittelt wird.

10. Verfahren gemäß einem der Ansprüche 1 bis 9, bei dem
der dem Querschnitt des herzustellenden Objekts (2) entsprechende Bereich in Abschnitte (203) aufgeteilt wird und Abschnitt für Abschnitt mit dem elektromagnetischen Strahl (22) abgetastet wird,
wobei der elektromagnetische Strahl (22) in mindestens einem Abschnitt entlang von Vektoren (W), insbesondere zueinander parallelen Vektoren (W), verfahren wird und
der elektromagnetische Strahl (22) zwischen der Abtastung zweier benachbarter Vektoren (W), bevorzugt an einem Umkehrpunkt zwischen den zwei benachbarten Vektoren (W), unterbrochen wird.

11. Verfahren gemäß Anspruch 10, bei dem
der elektromagnetische Strahl (22) während der Abtastung eines Abschnitts (203) mehrere Male unterbrochen wird.

12. Verfahren gemäß einem der Ansprüche 10 oder 11, bei dem
die Abschnitte (203) zueinander parallele längliche Streifen (S) sind und
zueinander parallele Vektoren (V), entlang derer mindestens ein Abschnitt (203) abgetastet wird, im Wesentlichen senkrecht zu einer Streifen-Längsrichtung liegen.

13. Vorrichtung zur Herstellung eines dreidimensionalen Objekts (2) mittels schichtweiser Verfestigung eines pulverförmigen Aufbaumaterials (11) durch elektromagnetische Strahlung (22), insbesondere Laserstrahlung (22), umfassend:

eine Abtasteinheit (20) zum Abtasten von einem Querschnitt des herzustellenden Objektes (2) entsprechenden Stellen einer aufgebrachten Schicht des pulverförmigen Aufbaumaterials (11) mit einem elektromagnetischen Strahl (22) aus einer Strahlungsquelle (21) zum selektiven Verfestigen des pulverförmigen Aufbaumaterials (11), eine Gasstrom-Leiteinheit (31, 32, 34, 35) ausgebildet zum Leiten eines Gasstroms (33) über die aufgebrachte Schicht während des Abtastens mit dem elektromagnetischen Strahl (22) und eine Irregularitätsermittlungseinheit (29,55) die im Betrieb eine Irregularitätsermittlung eines Vorliegens einer Prozessirregularität in Bezug auf mindestens einen Prozessparameter bei der Herstellung durchführt, wobei die Vorrichtung so ausgebildet ist, dass sie während des Abtastens mit dem elektromagnetischen Strahl (22) den Abtastvorgang an mindestens einer aktuellen Stelle des zu verfestigenden Querschnitts auf Basis eines Ergebnisses der Irregularitätsermittlung unterbricht, wobei der elektromagnetische Strahl (22) für einen Zeitraum von höchstens 70ms unterbrochen wird, und wobei eine Prozessirregularität ein Auftreten und/oder ein erhöhtes Auftreten von Partikeln wie Spratzern, Rauch, Dämpfen o.ä. ist und/oder eine während des Abtastens veränderte Strahlungsemission von einem Einwirkort des elektromagnetischen Strahls auf das Aufbaumaterial ist und/oder eine große Oberflächenrauheit eines bereits verfestigten Abschnitts des herzustellenden Objekts ist.

**14.** Steuereinheit (29) mit einer Vorrichtung gemäß Anspruch 13, wobei die Steuereinheit so ausgebildet ist, dass sie das Verfahren nach einem der Ansprüche 1 bis 12 durchführt.

**15.** Computerprogramm, das in eine programmierbare Steuereinheit und/oder Vorrichtung ladbar ist, mit Programmcodemitteln, um alle Schritte eines Verfahrens gemäß einem der Ansprüche 1 bis 12 auszuführen, wenn das Computerprogramm auf der Steuereinheit nach Anspruch 14 und/oder der Vorrichtung nach Anspruch 13 ausgeführt wird.

## Claims

**1.** A method of manufacturing a three-dimensional object (2) by means of a layer-wise solidification of a building material (11) in powder form by means of electromagnetic radiation, in particular laser radiation, comprising the steps:

scanning positions of an applied layer of the building material (11) in powder form that correspond to a cross-section of the object (2) to be manufactured by means of an electromagnetic beam (22) from a radiation source (21) in order to selectively solidify the building material in powder form (11), passing a gas flow (33) over the applied layer during the scanning with the electromagnetic beam (22) and irregularity determination of the existence of a process irregularity with respect to at least one process parameter in the manufacture, wherein during the scanning with the electromagnetic beam (22) the scanning process is interrupted at at least one current position of the cross-section to be solidified based on a result of the irregularity determination, wherein the electromagnetic beam (22) is interrupted for a time period of at most 70 ms, and wherein a process irregularity is an occurrence and/or an increased occurrence of particles such as splashes, smoke, vapors or the like and/or a change of the emission of radiation from the position of interaction of the electromagnetic beam on the building material during the scanning and/or a high surface roughness of an already solidified portion of the object to be manufactured.

**2.** Method according to claim 1, in which the electromagnetic beam (22) is interrupted for a time period of at most 50 ms, preferably at most 30 ms and particularly preferably at most 8 ms.

**3.** Method according to claim 1 or 2, in which the electromagnetic beam (22) is interrupted for a time period of at least 1 ms, preferably at least 2 ms, particularly preferably at least 10 ms.

**4.** Method according to one of claims 1 to 3, in which during the interruption the electromagnetic beam (22) carries out a scanning operation at another position than the current position.

**5.** Method according to one of claims 1 to 4, in which after the interruption is finished the electromagnetic beam (22) is directed immediately adjacent the current position at which the interruption took place before.

**6.** Method according to one of claims 1 to 5, in which the interruption is triggered depending on information derived from the process irregularity, in particular the interruption is time-controlled depending on information derived from the process irregularity.

**7.** Method according to one of claims 1 to 6, in which the irregularity determination includes a detection of an optical emission behavior of respective scanned positions of the layer of the building material in powder form (11) during the scanning with the electromagnetic beam (22) and in which it is determined that a process irregularity exists, if a significant change of the optical emission behavior is recorded.

**8.** Method according to claim 7, in which the change of the optical emission behavior is recorded as being significant if a significant change of a parameter value is recorded which represents a spectral composition and/or an intensity of a radiation, in particular visible and/or near-infrared light, emitted from a scanned position.

**9.** Method according to claim 8, in which the significant change and/or the significant variation is determined based on threshold values.

**10.** Method according to one of claims 1 to 9, in which the region corresponding to the cross-section of the object (2) to be manufactured is divided into sections (203) and is scanned section by section with the electromagnetic beam (22),

wherein the electromagnetic beam (22) in at least one section is moved along vectors (W), in particular vectors (W) that are in parallel to each other, and

the electromagnetic beam (22) is interrupted between the scanning of two neighboring vectors (W), preferably at a reversal point between two neighboring vectors (W).

**11.** Method according to claim 10, in which the electromagnetic beam (22) is interrupted several times during the scanning of a section (203).

**12.** Method according to one of claims 10 or 11, in which the sections (203) are elongate stripes (S) that are parallel to each other and

vectors (V) that are parallel to each other and along which at least one section (203) is scanned are substantially perpendicular to a longitudinal direction of the stripe.

**13.** A device for manufacturing a three-dimensional object (2) by means of a layer-wise solidification of a building material in powder form (11) by electromagnetic radiation (22), in particular laser radiation (22), comprising:

a scanning unit (20) for scanning positions of an applied layer of the building material in powder form (11) corresponding to a cross-section of the object (2) to be manufactured with an electromagnetic beam (22) from a radiation source (21) in order to selectively solidify the building material (11) in powder form,

a gas flow guiding unit (31, 32, 34, 35) designed to pass a gas flow (33) over the applied layer during the scanning with the electromagnetic beam (22) and

an irregularity determination unit (29, 55) that when being operated carries out an irregularity determination of the presence of a process irregularity with respect to at least one process parameter in the manufacture,

wherein the device is designed such that it interrupts the scanning operation at at least one current position of the cross-section to be solidified during the scanning with the electromagnetic beam (22) based on a result of the irregularity determination, wherein the electromagnetic beam (22) is interrupted for a time period of at most 70 ms, and

wherein a process irregularity is an occurrence and/or an increased occurrence of particles such as splashes, smoke, vapors or the like and/or a change of the emission of radiation from the position of interaction of the electromagnetic beam on the building material during the scanning and/or a high surface roughness of an already solidified portion of the object to be manufactured.

**14.** A control unit (29) with a device according to claim 13, wherein the control unit is designed such that it implements the method according to one of claims 1 to 12.

**15.** A computer program that can be loaded into a programmable control unit and/or device, the computer program having program code means for carrying out all steps of a method according to one of claims 1 to 12 when the computer program is executed in the control unit according to claim 14 and/or the device according to claim 13.

**Revendications**

1. Procédé de fabrication d'un objet (2) tridimensionnel au moyen de la solidification par couches d'un matériau de construction (11) pulvérulent par un rayonnement électromagnétique, en particulier un rayonnement laser, avec les étapes de :

   balayage d'emplacements, correspondant à une coupe transversale de l'objet (2) à fabriquer, d'une couche appliquée du matériau de construction (11) pulvérulent avec un faisceau (22) électromagnétique depuis une source de rayonnement (21) pour une consolidation sélective du matériau de construction (11) pulvérulent,
   guidage d'un flux gazeux (33) par-dessus la couche appliquée pendant le balayage avec le faisceau (22) électromagnétique et
   détermination d'irrégularités, lors de la fabrication, d'une présence d'une irrégularité de processus en fonction d'au moins un paramètre de processus,
   dans lequel, pendant le balayage avec le faisceau (22) électromagnétique, l'opération de balayage est interrompue en au moins un emplacement en cours de la coupe transversale à consolider sur la base d'un résultat de la détermination d'irrégularités, dans lequel le faisceau (22) électromagnétique est interrompu pendant une durée d'au plus 70 ms, et
   dans lequel une irrégularité de processus est une apparition et/ou une apparition accrue de particules telles des dispersions, de la fumée, de la buée ou analogue, et/ou est une émission de rayonnement modifiée pendant le balayage d'un lieu de réaction du faisceau électromagnétique sur le matériau de construction, et/ou est une grande rugosité de surface d'une section déjà consolidée de l'objet à fabriquer.

2. Procédé selon la revendication 1, dans lequel le faisceau (22) électromagnétique est interrompu pendant une durée d'au plus 50 ms, de préférence d'au plus 30 ms et particulièrement de préférence d'au plus 8 ms.

3. Procédé selon la revendication 1 ou 2, dans lequel le faisceau (22) électromagnétique est interrompu pendant une durée d'au moins 1 ms, de préférence d'au moins 2 ms, particulièrement de préférence d'au moins 10 ms.

4. Procédé selon l'une des revendications 1 à 3, dans lequel,
   pendant l'interruption, le faisceau (22) électromagnétique réalise une opération de balayage en un emplacement autre que l'emplacement en cours.

5. Procédé selon l'une des revendications 1 à 4, dans lequel,
   après achèvement de l'interruption, le faisceau (22) électromagnétique est orienté directement à côté de l'emplacement en cours au niveau duquel l'interruption avait eu lieu.

6. Procédé selon l'une des revendications 1 à 5, dans lequel
   l'interruption est déclenchée en fonction d'informations dérivées de l'irrégularité de processus, en particulier modulée dans le temps en fonction d'informations dérivées de l'irrégularité de processus.

7. Procédé selon l'une des revendications 1 à 6, dans lequel
   la détermination d'irrégularités pendant le balayage avec le faisceau (22) électromagnétique comprend la saisie d'un comportement d'émission optique d'emplacements respectivement balayés de la couche du matériau de construction (11) pulvérulent et, en fonction de la présence d'une irrégularité de processus, il est décidé quand une modification significative dans le comportement d'émission optique est enregistrée.

8. Procédé selon la revendication 7, dans lequel
   la modification dans le comportement d'émission optique est enregistrée comme étant significative dès lors qu'une variation significative d'une valeur de paramètre a été enregistrée, laquelle représente une composition spectrale et/ou une intensité d'un faisceau émis depuis un emplacement balayé, en particulier d'une lumière visible et/ou infrarouge proche.

9. Procédé selon la revendication 8, dans lequel
   la modification significative et/ou la variation significative est déterminée sur la base d'une valeur-seuil.

10. Procédé selon l'une des revendications 1 à 9, dans lequel
    la zone correspondant à la coupe transversale de l'objet (2) à fabriquer est subdivisée en sections (203) et est balayée section par section avec le faisceau (22) électromagnétique,

dans lequel le faisceau (22) électromagnétique est déplacé le long de vecteurs (W), en particulier de vecteurs (W) parallèles les uns aux autres, et

le faisceau (22) électromagnétique est interrompu entre le balayage de deux vecteurs (W) avoisinants, de préférence en un point d'inversion entre les deux vecteurs (W) avoisinants.

11. Procédé selon la revendication 10, dans lequel

le faisceau (22) électromagnétique est interrompu plusieurs fois pendant le balayage d'une section (203).

12. Procédé selon l'une des revendications 10 ou 11, dans lequel

les sections (203) sont des bandes allongées parallèles les unes aux autres, et

des vecteurs (V) parallèles les uns aux autres, le long desquels au moins une section (203) est balayée, sont essentiellement perpendiculaires à une direction longitudinale des bandes.

13. Dispositif de fabrication d'un objet (2) tridimensionnel au moyen de la solidification par couches d'un matériau de construction (11) pulvérulent par un rayonnement électromagnétique (22), en particulier un rayonnement laser (22), comprenant :

une unité de balayage (20) pour balayer des emplacements, correspondant à une coupe transversale de l'objet (2) à fabriquer, d'une couche appliquée du matériau de construction (11) pulvérulent avec un faisceau (22) électromagnétique depuis une source de rayonnement (21) pour une consolidation sélective du matériau de construction (11) pulvérulent,

une unité de guidage de flux gazeux (31, 32, 34, 35) conçue pour guider un flux gazeux (33) par-dessus la couche appliquée pendant le balayage avec le faisceau (22) électromagnétique et

une unité de détermination d'irrégularités (29, 55) qui en fonctionnement réalise, lors de la fabrication, une détermination d'irrégularités d'une présence d'une irrégularité de processus en fonction d'au moins un paramètre de processus,

dans lequel le dispositif est ainsi conçu que, pendant le balayage avec le faisceau (22) électromagnétique, il interrompt l'opération de balayage en au moins un emplacement en cours de la coupe transversale à consolider sur la base d'un résultat de la détermination d'irrégularités, dans lequel le faisceau (22) électromagnétique est interrompu pendant une durée d'au plus 70 ms, et

dans lequel une irrégularité de processus est une apparition et/ou une apparition accrue de particules telles des dispersions, de la fumée, de la buée ou analogue, et/ou est une émission de rayonnement modifiée pendant le balayage d'un lieu de réaction du faisceau électromagnétique sur le matériau de construction, et/ou est une grande rugosité de surface d'une section déjà consolidée de l'objet à fabriquer.

14. Unité de guidage (29) avec un dispositif selon la revendication 13, dans lequel

l'unité de guidage est ainsi conçue qu'elle réalise le procédé selon l'une des revendications 1 à 12.

15. Programme informatique qui peut être chargé dans une unité de guidage et/ou un dispositif pouvant être programmé(e), avec des moyens de code de programme pour réaliser toutes les étapes d'un procédé selon l'une des revendications 1 à 12 lorsque le programme informatique est exécuté sur l'unité de guidage selon la revendication 14 et/ou le dispositif selon la revendication 13.

Fig. 1

**Fig. 2**

Fig. 3

# Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19514740 C1
- DE 102007014683 A1
- DE 102013205724 A1
- DE 19853947 A1
- US 2012126457 A1
- WO 9208592 A